# FASCICULE DE BREVET EUROPEEN

(11) **EP 0 861 397 B1**
(45) Date de publication et mention de la délivrance du brevet: **05.09.2001**
(21) Numéro de dépôt: 96939963.3
(22) Date de dépôt: 21.11.1996
(51) Int. Cl.: F16L 11/22

(54) **CANALISATION FLEXIBLE A CONDUITES MULTIPLES RESISTANTE A L'ECRASEMENT**
DRUCKFESTER MEHRFACHSCHLAUCH
MULTIPLE-TUBE FLEXIBLE PIPE HAVING HIGH COMPRESSIVE STRENGTH

(30) Priorité: 24.11.1995 FR 9513974
(43) Date de publication de la demande: 02.09.1998
(73) Titulaire: COFLEXIP, 75116 Paris (FR)
(72) Inventeur: LEGALLAIS, Lucien, F-78630 Orgeval (FR); BINET, Eric, F-76130 Mont-Saint-Aignan (FR)
(74) Mandataire: Levy, David
(86) Numéro de dépôt international: FR9601848
(87) Numéro de publication internationale: WO9720162

(56) Documents cités:
- DE-A- 1 918 575
- GB-A- 923 816
- US-A- 4 332 509

## Description

La présente invention concerne une canalisation flexible destinée à relier par exemple une tête de puits de pétrole sous-marin à une installation d'exploitation pétrolière sous-marine ou flottante.

Une tête de puits de pétrole sous-marin est habituellement reliée à une installation d'exploitation pétrolière sous-marine ou flottante par plusieurs canalisations, dont :
- une ligne de production constituée par une conduite flexible, destinée à l'acheminement des hydrocarbures liquides,
- une ligne de service constituée par une ou plusieurs conduites flexibles, destinée à l'acheminement d'hydrocarbures gazeux de dégazage ou de gaz comprimé pour provoquer la remontée des hydrocarbures liquides,
- un ombilical de commande comportant une ou plusieurs conduites hydrauliques sensibles à l'écrasement et/ou des câbles électriques et/ou optiques pour la transmission d'énergie et/ou d'informations.

Les conduites flexibles utilisées pour servir de lignes de production ou de service présentent une résistance mécanique élevée en particulier à la pression interne, à la traction et à l'écrasement, et sont habituellement posées au moyen de dispositifs tensionneurs comportant des chenilles munies de patins qui enserrent la conduite et se déplacent en translation sur une course donnée pour l'entraîner conjointement.

Les efforts de traction appliqués par ces dispositifs tensionneurs à chenilles sur une conduite flexible peuvent être considérables lors de la pose à grande profondeur, et les forces de compression exercées par les patins sur la conduite doivent être suffisamment élevées pour éviter tout glissement relatif entre les patins et la conduite.

Les ombilicaux de commande ont une résistance aux efforts d'écrasement moindre que les conduites flexibles servant de lignes de production ou de service en raison de la présence de conduites sensibles à l'écrasement et ne peuvent être posés au moyen de dispositifs tensionneurs à chenilles.

La pose des ombilicaux s'effectue généralement avec des treuils, la transmission des efforts de traction étant assurée par au moins une couche d'armure en métal située dans l'enveloppe externe de la canalisation.

Par ailleurs, les câbles électriques et/ou optiques présents dans les ombilicaux ont une mauvaise résistance à la traction.

Or, les contraintes de traction auxquelles peuvent être soumises les différentes couches d'un faisceau de câbles mis en flexion augmentent à mesure que l'on s'éloigne de l'axe central (ou fibre neutre).

On préfère donc disposer les câbles électriques et/ou optiques d'un ombilical de commande le plus près possible de l'axe central. Dans le cas où l'ombilical de commande comporte une conduite centrale, on ne peut excéder pour cette dernière un certain diamètre sous peine de soumettre les câbles électriques et/ou optiques enroulés autour de celle-ci à des contraintes excessives susceptibles d'entraîner leur rupture.

Dans la pratique, le diamètre externe des ombilicaux n'excède donc pas 200 mm.

La tendance actuelle est d'augmenter le nombre de têtes de puits sous-marines reliées à une même installation de production.

La demanderesse a proposé lors de la Conférence Offshore Technology à Houston, Texas, en 1987 de simplifier les opérations de pose et de manutention des lignes de production et de service et ombilicaux de commande en les regroupant au sein de canalisations à conduites multiples plus compactes, plus faciles à manipuler et à installer.

Ces canalisations à conduites multiples doivent toutefois :
- résister aux efforts de traction très élevés en cas de pose à grande profondeur,
- résister aux efforts d'écrasement engendrés au contact d'un support incurvé ou lors du passage entre les patins d'un dispositif de pose ou de manutention à chenilles,
- présenter une flexibilité suffisante pour résister aux sollicitations mécaniques de flexion et de traction combinées dues à la houle.

Les canalisations telles que décrites dans la Conférence précitée et qui comportent des conduites périphériques sensibles à l'écrasement sont inaptes à résister au passage dans des dispositifs tensionneurs à chenilles.

Le document DE-A-1 918 575 divulgue une canalisation flexible à conduites multiples mais qui ne comprend pas un organe flexible de transmission d'effort d'écrasement disposé dans un espace annulaire ménagé dans ladite canalisation.

La présente invention a pour objet une nouvelle canalisation flexible, à conduites multiples permettant de simplifier les opérations de pose et de manutention, du type comportant un élément flexible central résistant à la traction et à l'écrasement et une pluralité de conduites périphériques enroulées autour dudit élément flexible central en au moins une nappe dans un espace annulaire compris entre ledit élément flexible central et une enveloppe, l'une au moins desdites conduites périphériques étant une conduite sensible à l'écrasement et/ou à la traction.

L'élément flexible central est typiquement une conduite tubulaire flexible du type utilisé pour servir de ligne de production et fabriquée en grande longueur par la demanderesse.

En variante, l'élément flexible central comporte un assemblage de plusieurs conduites tubulaires flexibles ou est constitué par un câble.

Selon l'invention, la canalisation à conduites multiples comporte au moins un organe flexible de transmission d'effort d'écrasement adjacent à ladite conduite périphérique sensible à l'écrasement et/ou à la traction disposé dans l'espace annulaire compris entre ledit élément flexible central et ladite enveloppe.

L'invention permet de concilier en une seule canalisation à conduites multiples d'une part une ligne de production et/ou de service et/ou un câble et d'autre part un ombilical de commande.

La mise en place de cette canalisation peut s'effectuer au moyen d'un dispositif de pose du type habituellement utilisé pour poser les conduites flexibles à résistance mécanique élevée telles que celles servant de lignes de production ou de service, en particulier un dispositif tensionneur à chenilles.

Selon une caractéristique particulièrement avantageuse de l'invention, la canalisation à conduites multiples comporte en outre des moyens de glissement aptes à permettre un déplacement axial relatif de ladite conduite sensible à 1a traction et/ou à l'écrasement et de l'organe flexible de transmission d'effort d'écrasement adjacent.

Le terme "conduite" désigne ici de manière générale aussi bien une conduite de liquide ou de gaz qu'un câble électrique ou optique.

Dans la pratique, ce sont les câbles électriques ou optiques qui présentent la résistance à la traction la plus faible et ceux pour lesquels le problème de la résistance à la traction est par conséquent le plus critique, une traction excessive pouvant entraîner la rupture du câble.

Dans une réalisation de l'invention, lesdits moyens de glissement comportent un jeu ménagé entre ladite au moins une conduite périphérique sensible à l'écrasement et/ou à la traction et ledit organe flexible de transmission d'effort d'écrasement adjacent.

De préférence, ce jeu j vérifie la relation
0,03 d ≤ j ≤ 0,2d, et de préférence la relation
0,1 d ≤ j ≤ 0,15d, où
d désigne le diamètre externe de la conduite périphérique sensible à la traction et/ou à l'écrasement.

Dans une réalisation de l'invention, la canalisation vérifie la relation 2E ≥ c ≥ 0,6E et de préférence la relation 1,6 E ≥ c ≥ 0,8E,
où c désigne la largeur dudit organe de transmission d'effort d'écrasement, mesurée à mi-épaisseur dudit espace annulaire et E désigne l'épaisseur dudit espace annulaire.

Dans une réalisation de l'invention, la canalisation comprend au moins deux conduites périphériques adjacentes sensibles à l'écrasement et/ou à la traction et elle comporte un organe de transmission d'effort d'écrasement entre lesdites deux conduites périphériques adjacentes dont la largeur c vérifie la relation c ≥ 0,6E, de préférence la relation c ≥ 0,8E, où

E désigne l'épaisseur dudit espace annulaire, la largeur c étant mesurée à mi-épaisseur de l'espace annulaire.

D'autres caractéristiques et avantages de la présente invention apparaîtront à la lecture de la description détaillée qui va suivre, d'exemples de réalisation non limitatifs de l'invention, et à l'examen du dessin annexé sur lequel :
- la figure 1 est une vue en coupe transversale, schématique, d'une canalisation flexible à conduites multiples conforme à un premier exemple de réalisation de l'invention,
- la figure 2 est une vue à échelle agrandie représentant un détail de la figure 1,
- la figure 3 est une vue en perspective, avec arrachement partiel, de la canalisation flexible représentée sur les figures 1 et 2,
- la figure 4 est une vue en coupe transversale, schématique, d'une canalisation flexible conforme à un deuxième exemple de réalisation de l'invention,
- la figure 5 est une vue en perspective, avec arrachement partiel, de la canalisation flexible représentée sur la figure 4,
- les figures 6 à 9 illustrent différentes configurations de l'enroulement en sections d'hélices de type "S-Z",
- la figure 10 est une vue partielle, en coupe transversale, représentant un détail de réalisation d'une canalisation flexible conforme à un troisième exemple de réalisation de l'invention,
- la figure 11 est une vue analogue à la figure 10 représentant un détail de réalisation d'une canalisation flexible conforme à un quatrième exemple de réalisation de l'invention,
- la figure 12 est une vue partielle, en coupe transversale, d'une canalisation flexible conforme à un cinquième exemple de réalisation de l'invention,
- la figure 13 est une vue en coupe transversale d'une canalisation flexible conforme à un sixième exemple de réalisation de l'invention,
- la figure 14 est une vue en coupe transversale d'une canalisation flexible conforme à un septième exemple de réalisation de l'invention, et
- la figure 15 est une vue en coupe transversale d'un organe de transmission d'effort d'écrasement utilisé dans la canalisation représentée sur la figure 14.

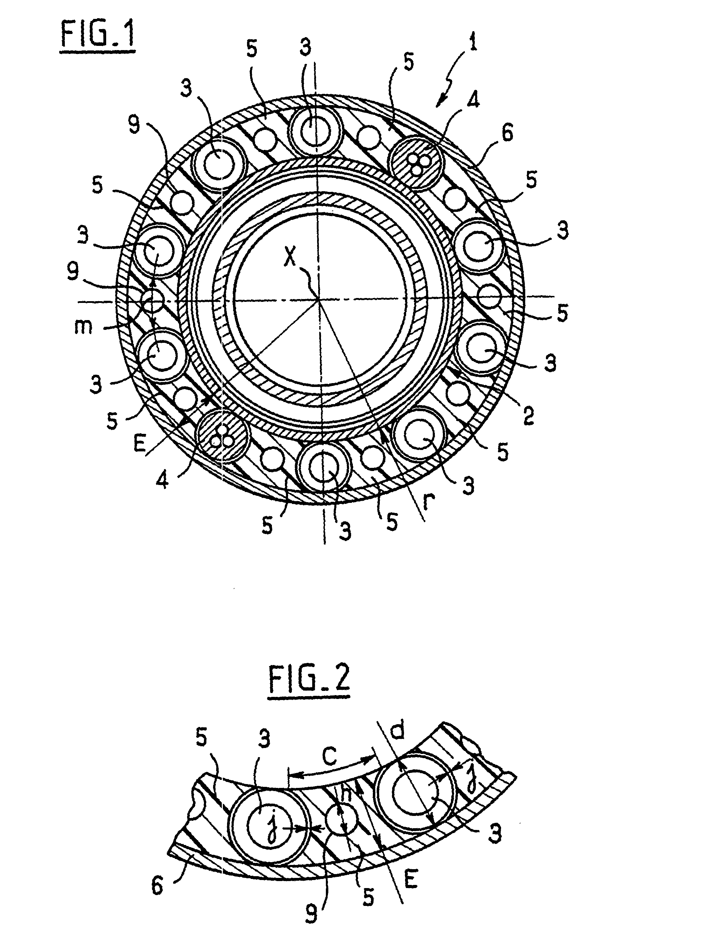

On a représenté en coupe transversale et de façon schématique sur la figure 1 une canalisation flexible 1 conforme à un premier exemple de réalisation de l'invention.

Cette canalisation flexible 1 comporte un élément flexible central constitué par une conduite centrale tubulaire 2, résistant à la traction et à l'écrasement, servant dans l'exemple décrit de ligne de production, une enveloppe 8 constituée par une gaine thermoplastique et une pluralité de conduites périphériques 3, de câbles électriques 4 et d'organes de transmission d'effort d'écrasement 5 disposés en une nappe dans l'espace annulaire compris entre l'enveloppe 8 et la conduite centrale 2.

En variante, la conduite centrale 2 peut servir de ligne de service, et être divisée en plusieurs conduites plus petites dont l'assemblage constitue un noyau central résistant à la traction et à l'écrasement.

Dans l'exemple décrit, la conduite centrale 2 est du type connu en soi pour le transport d'hydrocarbures et/ou de gaz et comporte une ou plusieurs couches résistantes à l'écrasement, une ou plusieurs couches d'étanchéité internes en polymère présentant le cas échéant des propriétés d'isolation thermique, une ou plusieurs couches de fils d'armure généralement métalliques enroulés en hélice sous forme de nappes croisées assurant la résistance à la traction et une couche externe de protection en polymère. Des conduites de ce type sont fabriquées en grande longueur par la société déposante. Leur diamètre externe est typiquement supérieur à 100 mm.

Dans l'exemple décrit, la conduite centrale 2 et l'enveloppe 8 sont concentriques et présentent chacune une section transversale circulaire.

Dans l'exemple décrit en référence à la figure 1, les conduites périphériques 3 et les câbles électriques 4 sont angulairement répartis autour de l'axe central X de la canalisation 1 et présentent un même diamètre externe.

Les conduites périphériques 3, au nombre de huit dans l'exemple décrit, sont des conduites hydrauliques sensibles à l'écrasement, et dans une moindre mesure sensibles à la traction.

Leur diamètre externe au repos est au plus égal à la dimension radiale E de l'espace annulaire compris entre la surface interne de l'enveloppe 8 et la surface externe de la conduite centrale 2.

D'une manière générale, d désignant le diamètre externe de la plus grande conduite périphérique, alors la dimension radiale ou épaisseur E de l'espace annulaire vérifie de préférence les relations :
d ≤ E ≤ 3d, avantageusement d ≤ E ≤ 1,5d.

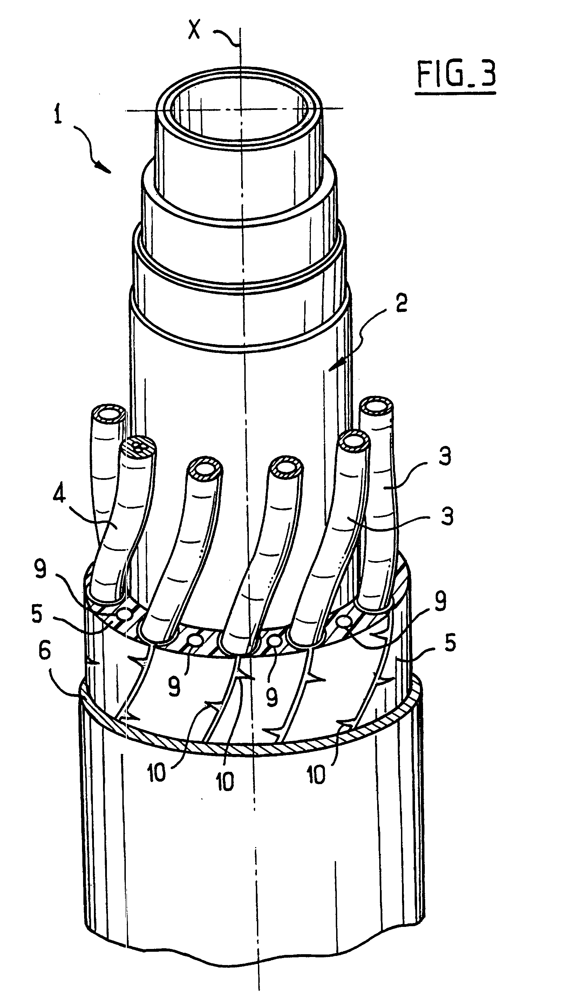

Comme représenté sur la figure 3, les conduites périphériques sont enroulées dans l'exemple décrit en hélice autour de la conduite centrale 2 avec un angle d'hélice constant compris entre 10° et 30°, de préférence égal à 15°.

Les organes flexibles 5 de transmission d'effort d'écrasement sont disposés chacun comme représenté sur les figures entre deux conduites périphériques 3 ou entre un câble électrique 4 et la conduite périphérique 3 adjacente.

Dans l'exemple de réalisation décrit, les organes flexibles 5 de transmission d'effort d'écrasement sont constitués chacun par un profilé réalisé par extrusion dans une matière plastique de dureté shore D supérieure ou égale à 30, et avantageusement supérieure ou égale à 50.

Comme on pourra le constater à l'examen des figures 1 à 3, chaque organe flexible 5 épouse sensiblement, par ses faces radialement interne et radialement externe, cylindriques de révolution autour de l'axe central x, la forme de la surface extérieure de la conduite centrale 2 et la forme de la surface intérieure de l'enveloppe 8 respectivement. Chaque organe flexible 5 épouse en outre sensiblement par ses faces latérales les formes cylindriques de révolution des conduites périphériques 3 ou 4 adjacentes.

Les organes flexibles de transmission d'effort d'écrasement 5 peuvent être réalisés en polyéthylène haute ou basse densité, en polyamide, en polypropylène, en PVC, en polyuréthane, éventuellement renforcés par une charge de fibres telles que des fibres de verre, ou en une mousse syntactique.

Dans l'exemple de réalisation décrit, et comme représenté sur la figure 3, les organes flexibles de transmission d'effort d'écrasement 5 sont munis sur leurs flancs latéraux d'encoches 10, avantageusement disposées en quinconce, et destinées à augmenter la déformabilité en flexion.

Lorsque la canalisation 1 est soumise sur sa surface externe à des forces d'écrasement dirigées sensiblement radialement vers l'intérieur et exercées par exemple par les patins d'un dispositif tensionneur à chenilles, ces forces d'écrasement sont transmises par les organes flexibles 5 de transmission d'effort d'écrasement à la conduite centrale 2.

Ainsi, les efforts de serrage exercés par les patins du dispositif tensionneur à chenilles sont transmis à la conduite centrale 2 et cette dernière supporte la quasi-totalité des efforts de traction transmis à la canalisation 1 par les patins du dispositif tensionneur à chenilles par l'intermédiaire des organes flexibles 5 et de l'enveloppe 8.

La conduite centrale 2 reprend ainsi la plus grande partie des efforts de traction auxquels est soumise la canalisation 1.

Typiquement, la conduite centrale reprend au moins 75 % des efforts de traction exercés sur la canalisation 1, voire au moins 80 ou 90 % desdits efforts.

L'enveloppe 8 peut ainsi avantageusement être constituée par une gaine ne présentant pas une résistance à la traction particulière, par exemple une gaine en un polymère tel que le polyéthylène basse densité ou un polyamide.

Grâce à la reprise des efforts de traction par la conduite centrale 2, les conduites périphériques 3 ou 4 ne sont pratiquement pas soumises aux efforts de traction.

Dans l'exemple de réalisation décrit en référence aux figures 1 à 3, les organes de transmission d'efforts d'écrasement 5 sont évidés intérieurement dans un soucis d'économie de matière et présentent des cavités internes 9 de section transversale circulaire.

On adopte de préférence la configuration selon laquelle un seul organe flexible 5 parcouru par une cavité interne 9 est disposé entre deux conduites périphériques adjacentes sensibles à l'écrasement et/ou à la traction lorsque l'espacement m des conduites périphériques adjacentes est supérieur ou égal au plus grand diamètre d de celles-ci et inférieur ou égal à deux fois l'épaisseur E de l'espace annulaire compris entre la surface externe de la conduite centrale 2 et la surface interne de l'enveloppe 8.

Dans le cas où l'espacement m entre lesdites conduites périphériques adjacentes est inférieur ou égal au plus grand diamètre externe d'entre elles, alors l'organe flexible 5 ne comporte de préférence pas de cavité interne 9.

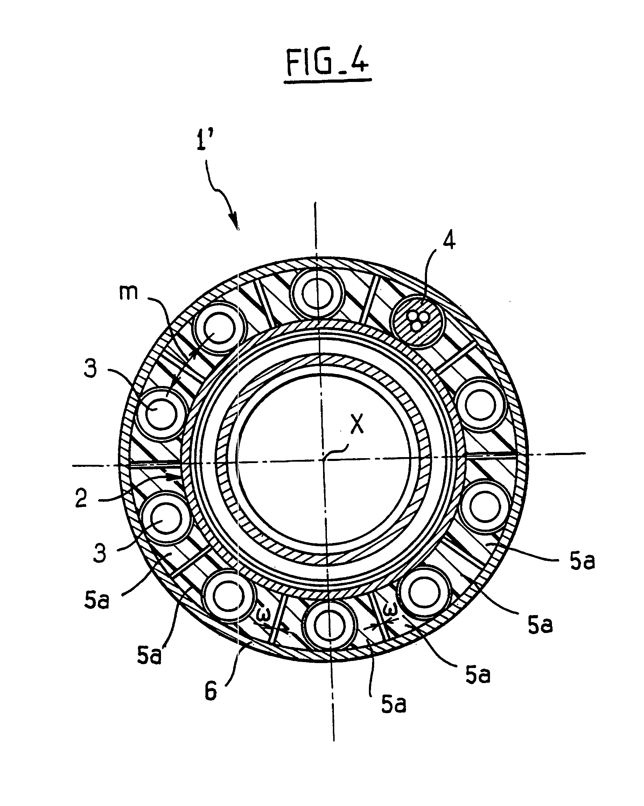

Dans le cas où l'espacement m des conduites périphériques adjacentes est supérieur ou égal à deux fois l'épaisseur E dudit espace annulaire, on préfère alors disposer au moins deux organes flexibles de transmission d'effort d'écrasement 5a entre les conduites périphériques, comme cela sera décrit dans la suite en référence aux figures 4, 5, 10 et 11.

L'écartement m entre deux conduites périphériques est avantageusement supérieur ou égal à 0,7 fois l'épaisseur E.

Dans l'exemple décrit en référence aux figures 1 à 3, l'écartement m est sensiblement égal à E.

De préférence, on veille à ce que la dimension circonférentielle c ou largeur de chaque organe flexible 5, mesurée à mi-épaisseur de l'espace annulaire E, vérifie la relation : 1,5 ≥ c / E ≥ 0,6.

Avantageusement, la distance des cavités internes 9 à une conduite périphérique 3 ou 4 adjacente est supérieure à 0,3 fois et de préférence à 0,5 fois l'épaisseur E et la dimension radiale h des cavités internes 9 est de préférence inférieure à 0,8 fois l'épaisseur E.

Dans l'exemple de réalisation représenté sur les figures 1 à 3, chaque organe flexible de transmission d'effort d'écrasement 5 est constitué par un profilé enroulé en hélice continue autour de la conduite centrale 2 et présente des faces latérales de section transversale en forme d'arc de cercle, conformées pour épouser sensiblement la forme de la surface externe des conduites périphériques adjacentes en ménageant un jeu annulaire j avec ces dernières.

En variante, les organes flexibles de transmission d'effort d'écrasement 5 peuvent être extrudés en un seul bloc de matière autour des conduites périphériques sensibles à l'écrasement et/ou à la traction, ces dernières ayant été au préalable enduites d'un lubrifiant pour permettre un glissement axial entre les organes flexibles de transmission d'effort d'écrasement 5 et lesdites conduites périphériques lorsque la canalisation est mise en flexion, comme cela sera précisé dans la suite.

Le jeu annulaire j confère aux conduites périphériques sensibles à la traction et/ou à l'écrasement une possibilité de glissement axial relativement aux organes flexibles de transmission d'effort d'écrasement 5 adjacents et constitue ainsi un moyen de glissement permettant d'éviter l'apparition, lorsque la canalisation 1 est mise en flexion, de contraintes de traction excessives provoquées par des effets de frottement entre les conduites périphériques et les organes de transmission d'effort d'écrasement 5 dans les portions des conduites périphériques se trouvant dans la région de la canalisation située du côté radialement externe par rapport à la concavité de la canalisation 1 incurvée, donc d'éviter un endommagement des conduites périphériques sensibles à la traction et/ou à l'écrasement.

Il est souhaitable que le jeu j entre une conduite périphérique sensible à la traction et/ou à l'écrasement, de diamètre externe d, et l'organe de transmission d'effort adjacent 5 vérifie la relation
0,6 ≥ j/d ≥ 0,03 avantageusement
0, 3 ≥ j/d ≥ 0,05

Bien entendu, on ne sort pas du cadre de l'invention en modifiant le nombre de conduites périphériques présentes dans l'espace annulaire entre la conduite centrale 2 et l'enveloppe 8, ou la structure de cette dernière.

L'enveloppe 8 est réalisée dans l'exemple de réalisation décrit par extrusion d'une matière plastique.

En variante, l'enveloppe 8 pourrait être réalisée au moyen d'un ruban en matériau plastique thermorétractable enroulé autour des conduites périphériques et des organes flexibles de transmission d'effort d'écrasement ou au moyen d'un ruban adhésif, en veillant toutefois à ne pas gêner le glissement relatif des conduites périphériques sensibles à la traction et/ou à l'écrasement et des organes flexibles de transmission d'effort d'écrasement.

Le rayon externe r de l'élément central 2 est,dans l'exemple de réalisation décrit en référence aux figures 1 à 3, supérieur à 50 mm, et peut atteindre ou dépasser 100 mm.

Le rayon externe R de la canalisation 1 peut atteindre jusqu'au triple du rayon r de l'élément flexible central 2.

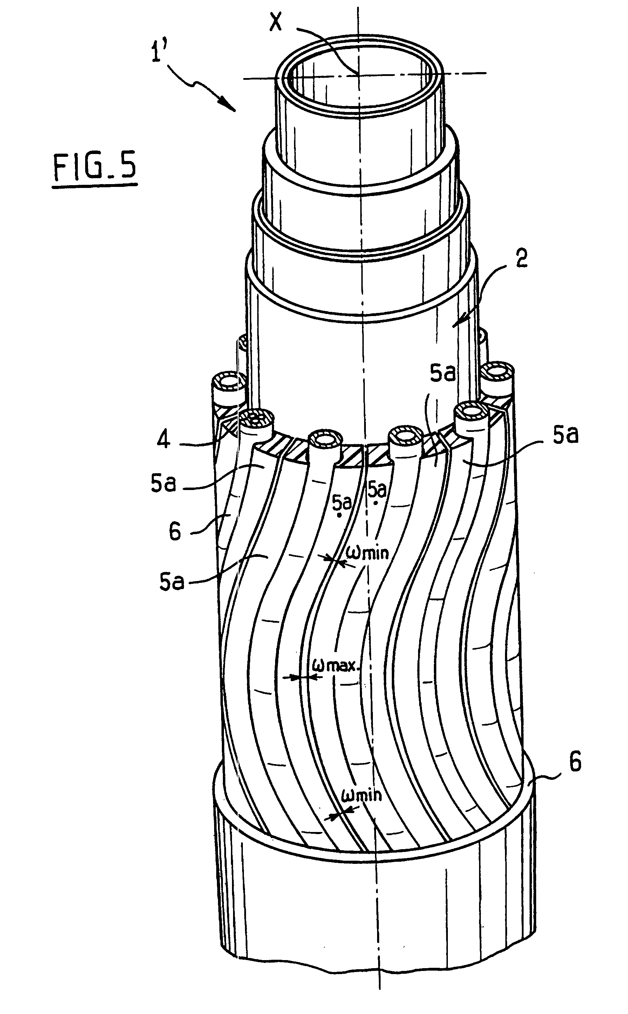

On a représenté sur les figures 4 et 5 une canalisation flexible 1' à conduites multiples conforme à un deuxième exemple de réalisation de l'invention. Cette canalisation 1' diffère de la canalisation flexible 1 précédemment décrite notamment par le fait que les organes flexibles de transmission d'effort d'écrasement sont plus nombreux, ce qui permet de mieux répartir le jeu latéral dans l'espace annulaire compris entre la conduite centrale 2 et la surface interne de l'enveloppe 8.

L'augmentation du nombre des organes de transmission d'effort d'écrasement s'accompagne d'une diminution de leur largeur c, donc d'une meilleure déformabilité en torsion de chacun des organes flexibles de transmission d'effort d'écrasement.

Dans l'exemple de réalisation décrit, deux conduites périphériques 3 adjacentes sont séparées par deux organes flexibles de transmission d'effort d'écrasement 5a ménageant chacun avec la conduite périphérique adjacente un jeu j comme décrit précédemment, et ménageant de plus entre eux un jeu w.

Dans l'exemple de réalisation des figures 4 et 5, les conduites périphériques et les organes flexibles de transmission d'effort d'écrasement 5a, qui sont constitués par des profilés, sont enroulés autour de la conduite centrale 2 selon des segments en hélice avec inversion de l'angle d'hélice du type "S-Z".

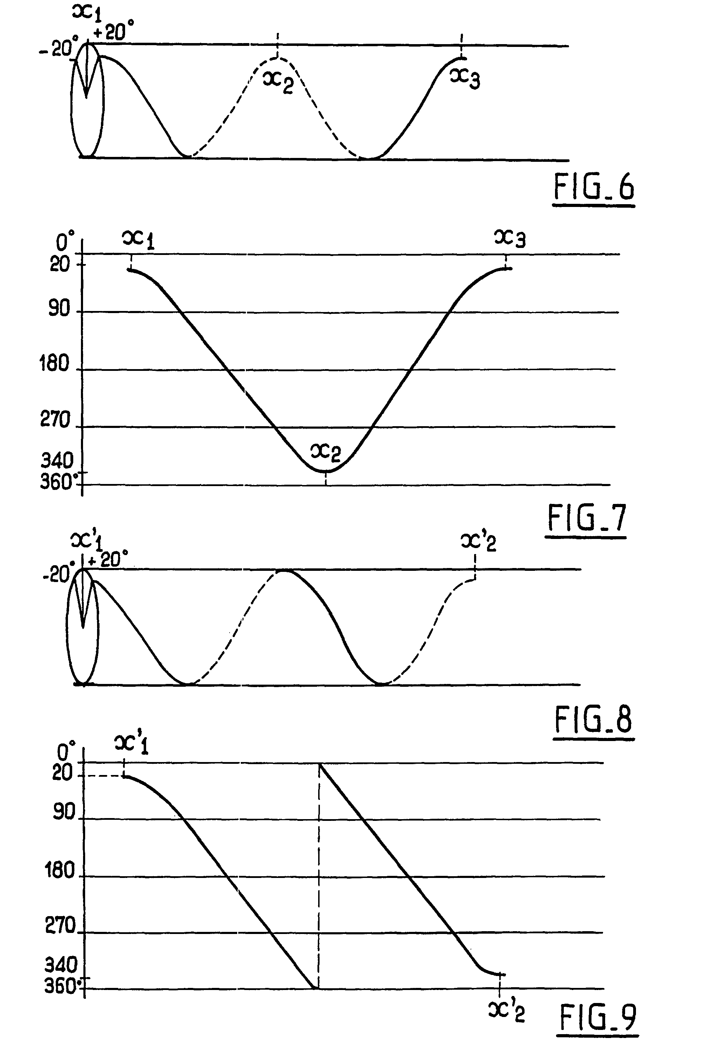

On a décrit de façon schématique en référence aux figures 6 à 9 le principe d'un tel enroulement.

L'enroulement du type "S-Z" comporte une succession de motifs d'enroulement identiques se répétant avec périodicité et comportant chacun d'une part des segments enroulés en hélice avec un angle d'hélice constant dans un sens positif (A1, B1; A'1,B'1) et des segments enroulés en hélice avec un angle d'hélice constant dans le sens négatif (B2,A2;B'2,A'2 non représenté) et, d'autre part, des segments d'inversion de sens enroulement assurant la variation progressive de l'angle d'enroulement entre lesdits segments d'angle d'hélice constant (B1,B2;B'1,B'2).

Les figures 6 et 7 correspondent à un enroulement dans lequel on effectue un peu moins d'un tour dans un sens puis dans l'autre. Plus précisément, entre les points d'inversion de sens d'enroulement, de positions axiales x1 et x2, on enroule dans un sens sur une course angulaire égale à 320°, puis entre les positions axiales x2, x3, on enroule en sens inverse sur la même course angulaire.

Les figures 8 et 9 correspondent à un enroulement dans lequel on enroule chaque conduite périphérique ou organe flexible 5 d'un tour complet plus 320° dans un sens d'enroulement entre les points d'inversion de sens de positions axiales x'1 et x'2 puis on enroule d'un tour complet plus 320° dans l'autre sens entre les points de positions axiales x'2 et x'3 (non illustré sur les figures).

Un motif cyclique complet est représenté sur les figures 6 et 7 entre les positions axiales x1 et x3. Sur les figures 8 et 9, on n'a représenté que la première moitié d'un motif cyclique entre les positions axiales x'1 et x'2.

L'enroulement de type "S-Z" est avantageux car les machines pour le réaliser sont plus simples que celles utilisées pour l'enroulement en hélice à pas constant. Toutefois, il présente l'inconvénient que le jeu j latéral n'est pas constant, étant maximum (jmax)au niveau des points de changement de sens d'enroulement (qui correspondent aux positions axiales x2 et x'2 sur les exemples des figures 6 à 9) et passant par des minima (jmin) entre ces points.

Si l'on veut autoriser un glissement axial relatif des conduites périphériques par rapport aux organes flexibles de transmission d'effort d'écrasement, il est souhaitable qu'un jeu minimum soit toujours présent entre les conduites périphériques et les organes flexibles de transmission d'effort d'écrasement, quelque soit la position axiale considérée sur la conduite. On choisit par conséquent le jeu minimum (jmin) supérieur à une valeur donnée. Les inventeurs ont constaté que de façon surprenante, malgré ce choix, le jeu maximum (jmax) restait suffisamment faible pour que les organes de transmission d'effort d'écrasement continuent à remplir leur fonction.

Dans l'exemple de réalisation représenté sur les figures 4 et 5, l'enroulement est en sections d'hélices de type "S-Z". L'angle d'hélice des segments en hélice est de préférence alternativement égal à +15° et -15°. Le chemin angulaire de chaque section d'hélice comprise entre deux points d'inversion de sens d'enroulement vaut de préférence (Nx360°)-40°+/-30° et avantageusement (Nx360°)-40°+/-15°, N étant un nombre entier égal ou supérieur à 1. Cette configuration présente l'avantage d'équilibrer globalement les contraintes de traction appliquées aux conduites périphériques de la canalisation lorsque celle-ci est mise en flexion.

En variante, comme cela a été décrit en référence à la figure 3, les conduites périphériques peuvent être enroulées en hélice (d'angle d'hélice constant) dans l'espace annulaire compris entre la conduite centrale et l'enveloppe.

Dans le mode d'enroulement en hélice avec un angle d'hélice constant, correspondant à l'exemple de réalisation des figures 1 à 3 ou dans le mode d'enroulement de type "S-Z" correspondant à l'exemple de réalisation des figures 4 et 5, on dispose avantageusement un ruban adhésif enroulé en spirale autour des conduites périphériques et des organes flexibles de transmission d'effort d'écrasement pour maintenir ces derniers dans une position concentrique adéquate par rapport à la conduite centrale 2, et l'on dispose avantageusement un ruban réalisé en un matériau connu pour ses propriétés d'anti-adhérence tel que du polytétrafluoroéthylène ou du "TERFANE" entre le ruban adhésif précité et les conduites périphériques, de manière à permettre un glissement axial relatif des conduites périphériques par rapport aux organes flexibles de transmission d'effort d'écrasement.

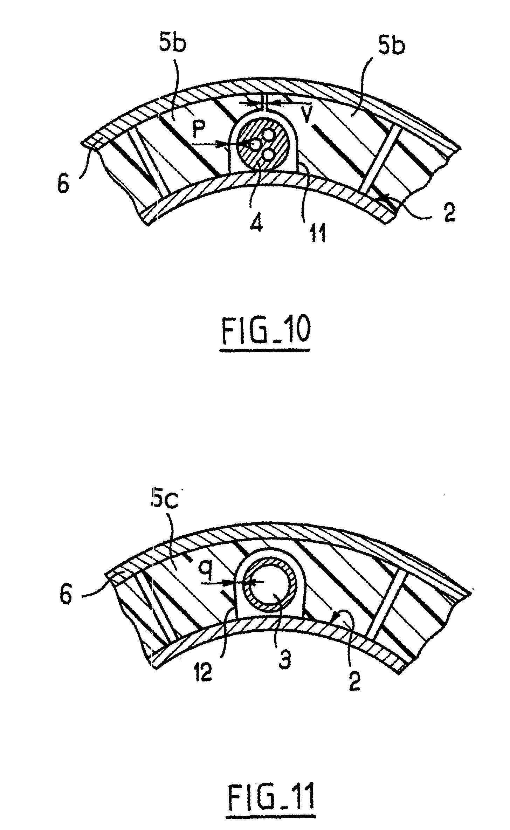

Lorsqu'une conduite périphérique tel qu'un câble 4 par exemple présente un diamètre externe d inférieur à la dimension radiale E de l'espace annulaire entre la conduite centrale 2 et la surface interne de l'enveloppe 8, on dispose de préférence comme représenté sur la figures 10 le câble 4 (ou en variante une conduite 3) dans une gorge 11 s'ouvrant sur la conduite centrale 2.

Dans l'exemple de réalisation représenté sur la figure 10, la gorge 11 est formée entre deux organes de transmission d'effort d'écrasement 5b ménageant un jeu latéral v entre eux et un jeu p radial avec le câble 4 (ou en variante une conduite 3) . De préférence, le jeu v est inférieur à la moitié du jeu p.

En variante, lorsqu'une conduite périphérique sensible à l'écrasement 3 (ou en variante un câble 4) présente un diamètre externe d inférieur à la dimension radiale E de l'espace annulaire entre la conduite centrale 2 et la surface interne de l'enveloppe 8, cette conduite périphérique 3 (ou en variante ce câble 4) est avantageusement, comme représenté sur la figure 11, disposé dans une gorge 12 formée dans un organe flexible de transmission d'effort d'écrasement 5c s'ouvrant sur la conduite centrale 2. La gorge 12 est conformée de manière à loger la conduite 3 (ou en variante le câble 4) avec un jeu q.

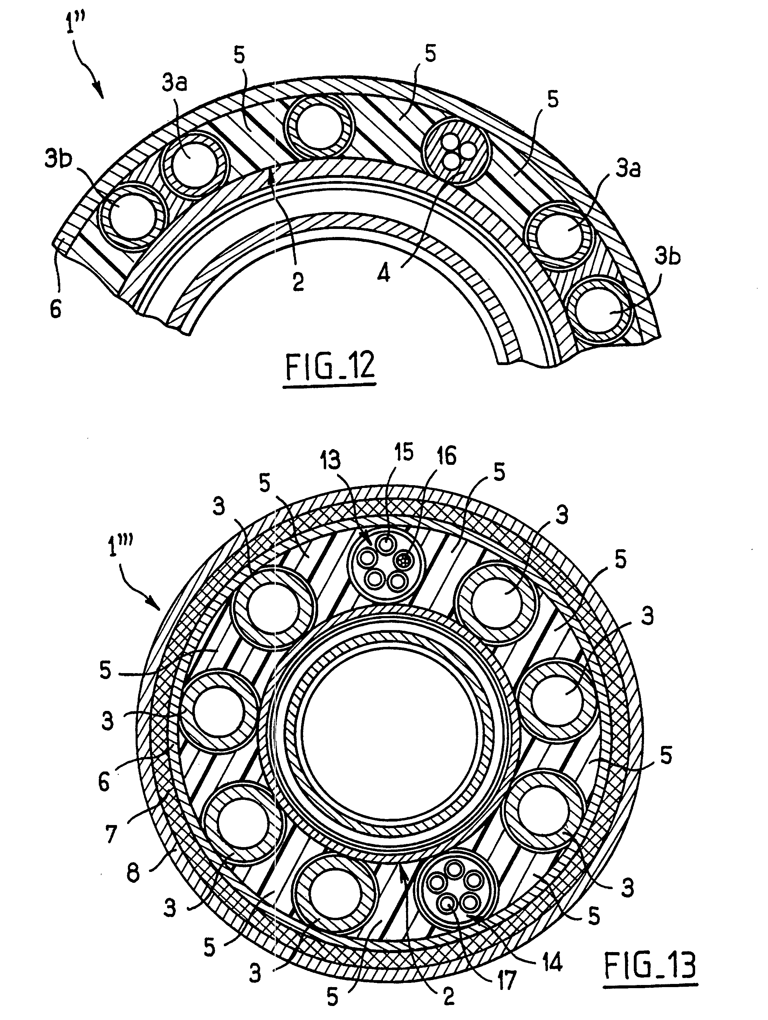

On a représenté sur la figure 12 une canalisation flexible 1" comportant des conduites périphériques 3a sensibles à l'écrasement, similaires aux conduites périphériques 3 des exemples de réalisation précédents, et des tuyaux 3b relativement rigides, par exemple du même type que la conduite centrale 2 ou éventuellement des tubes métalliques ou câbles. Dans le cas où les tuyaux 3b peuvent assurer la transmission des efforts d'écrasement, il n'est pas nécessaire que la région de l'espace annulaire compris entre une conduite périphérique 3a et un tuyau 3b adjacent suffisamment proche soit remplie par un organe flexible de transmission d'effort d'écrasement 5 tel que décrit précédemment et l'on peut se contenter pour remplir cet espace d'utiliser un matériau de remplissage ne présentant pas une dureté particulière, par exemple une matière élastomère de dureté Shore D inférieure à 30 dans le cas où l'entraxe entre le tuyau 3b et la conduite périphérique adjacente 3a est inférieure ou égale à 1,5 fois le diamètre externe de la conduite périphérique.

On a représenté sur la figure 13 une canalisation 1"' comportant une conduite centrale 2 servant de ligne de production, une pluralité de conduites périphériques 28 servant de ligne de service, et deux ombilicaux de commande 13 et 14 disposés dans l'espace annulaire entre l'enveloppe et la conduite centrale 2. Les conduites périphériques 28 et les ombilicaux 13,14 sont séparés par des organes flexibles de transmission d'effort d'écrasement 5 tels que décrits précédemment.

L'enveloppe comporte une gaine de plastique 8a interne, une armure constituée par deux nappes croisées de fils métalliques 8b et une gaine plastique externe 8c.

La résistance aux efforts d'écrasement d'une conduite peut être caractérisée par une raideur, évaluée en mesurant la masse à appliquer entre deux plateaux parallèles enserrant un mètre de conduite pour aboutir à une déformation radiale égale à 1 %. Dans le cas de la conduite centrale 2, cette raideur est avantageusement supérieure ou égale à 5t/m/%. La résistance à l'écrasement des conduites sensibles à l'écrasement peut être caractérisée par une raideur inférieure à 0,5 t/m/% et le plus souvent inférieure à 0,2 t/m/%. La raideur nécessaire à une canalisation pour supporter les efforts d'écrasement dus aux moyens de pose et de manutention (dispositifs tensionneurs à chenilles, bobines de stockage, goulottes etc...) est typiquement supérieure à 0,5 t/m/% et le plus souvent supérieure à 1t/m/%.

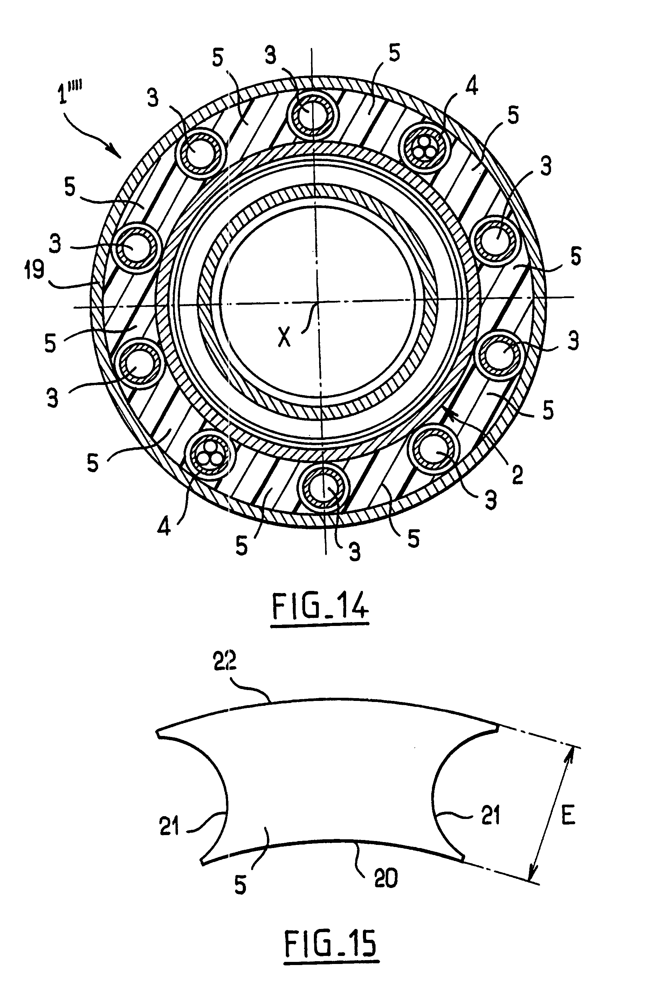

On a représenté sur la figure 14 une canalisation 1"" dans laquelle l'enveloppe 8 est constituée d'une couche unique en polyamide PAll d'épaisseur 5,2mm. Le diamètre extérieur des conduites périphériques, du type "SYNFLEX" vaut 16 mm et leur diamètre intérieur 9,5 mm (3/8in). Chaque organe flexible 5 de transmission d'effort d'écrasement est réalisé en polyéthylène haute densité "LUPOLEN" et présente en section transversale la forme représentée sur la figure 15. La surface radialement interne 20 de l'organe flexible 5 présente un rayon de courbure égal dans l'exemple décrit à 58,9 mm. La dimension radiale E vaut 16,5 mm et la distance entre les flancs 21 vaut 21,5 mm. La distance entre les extrémités latérales de la surface radialement externe 22 vaut 37,5 mm. La conduite centrale 2 est une conduite réalisée par la société déposante, de type "COFLEXIP", de diamètre interne égal à 63,5 mm (2,5") et de diamètre externe égal à 108,9 mm, cette conduite résistant à une pression interne de 6350 PSI (438 Bar).

A titre indicatif, on a mesuré les résultats expérimentaux suivants, pour cette canalisation et pour une charge appliquée de 28,83 T/m :

| Structure testée | déformation % | raideur T/m/% |
|---|---|---|
| canalisation | 14 | 2,05 |
| conduite centrale "COFLEXIP" | 0,99 | 29,12 |
| conduite périphérique "SYNFLEX" | 14 | 0,121 |

Grâce à l'invention, on peut réaliser une canalisation à conduites multiples présentant une conduite centrale résistant à l'écrasement et à la traction, de diamètre externe important, et des câbles électriques et/ou optiques enroulés autour de cette conduite centrale sans que ces derniers ne cassent lorsque la canalisation est mise en flexion, malgré leur éloignement de l'axe central de la canalisation.

Bien entendu, l'invention n'est pas limitée aux exemples de réalisation qui viennent d'être décrits.

## Revendications

1. Canalisation flexible (1;1';1";1"';1"") à conduites multiples, comprenant un élément flexible central (2) résistant à la traction et à l'écrasement, une enveloppe (8) et une pluralité de conduites périphériques (3) enroulées autour de l'élément flexible central en au moins une nappe dans un espace annulaire compris entre ledit élément flexible central (2) et ladite enveloppe (8), l'une au moins desdites conduites périphériques (3) étant sensible à l'écrasement et/ou à la traction, caractérisée par le fait que la canalisation flexible comporte en outre au moins un organe flexible de transmission d'effort d'écrasement (5;5a;5b;5c), disposé dans ledit espace annulaire et adjacent à ladite conduite périphérique (3,4) sensible à l'écrasement et/ou à la traction.

2. Canalisation flexible selon la revendication 1, caractérisée par le fait qu'elle comporte des moyens de glissement aptes à permettre un déplacement axial relatif de ladite au moins une conduite périphérique sensible à l'écrasement et/ou à la traction par rapport à l'organe flexible de transmission d'effort d'écrasement (5;5a;5b;5c) adjacent.

3. Canalisation flexible selon la revendication 2, caractérisée par le fait que lesdits moyens de glissement comportent un jeu (j;p;q) ménagé entre ladite au moins une conduite périphérique sensible à l'écrasement et/ou à la traction (3;4) et ledit organe flexible de transmission d'effort d'écrasement (5;5a;5b;5c) adjacent.

4. Canalisation flexible selon la revendication 3, caractérisée par le fait que ledit jeu (j;p;q) vérifie la relation
0,03 d ≤ (j;p;q) ≤ 0,2d, et de préférence la relation
0,1 d ≤ (j;p;q) ≤ 0,15d, où
d désigne le diamètre externe de la conduite périphérique sensible à la traction et/ou à l'écrasement

5. Canalisation flexible selon l'une quelconque des revendications 1 à 4, caractérisée par le fait que ledit organe de transmission d'effort d'écrasement se présente sous la forme d'un profilé (5;5a;5b;5c).

6. Canalisation flexible selon l'une quelconque des revendications 1 à 5, caractérisée par le fait que lesdites conduites périphériques sont enroulées en hélice autour de l'axe central (x) de ladite canalisation.

7. Canalisation flexible selon l'une quelconque des revendications 1 à 5, caractérisée par le fait que lesdites conduites périphériques sont enroulées en segments en hélice de type "S-Z".

8. Canalisation flexible selon l'une quelconque des revendications 6 et 7, caractérisée par le fait que l'angle d'hélice dudit enroulement en hélice ou dudit enroulement en segments en hélice est compris en valeur absolue entre 10 et 30°, de préférence égal à 15°.

9. Canalisation flexible selon l'une quelconque des revendications 1 à 8, caractérisée par le fait que ledit organe de transmission d'effort d'écrasement (5;5a;5b;5c) est réalisé dans une matière plastique de dureté shore D supérieure ou égale à 30 et de préférence supérieure ou égale à 50.

10. Canalisation flexible selon l'une quelconque des revendications 1 à 9, comprenant au moins deux conduites périphériques adjacentes sensibles à l'écrasement et/ou à la traction, caractérisée par le fait qu'elle comporte un organe de transmission d'effort d'écrasement entre lesdites deux conduites périphériques adjacentes dont la largeur c vérifie la relation c ≥ 0,6 E, de préférence la relation c ≥ 0,8 E, où
E désigne l'épaisseur dudit espace annulaire, la largeur c étant mesurée à mi-épaisseur de l'espace annulaire.

11. Canalisation flexible selon l'une quelconque des revendications 1 à 10, comportant au moins deux conduites périphériques sensibles à l'écrasement et/ou à la traction, caractérisée par le fait que ces deux conduites sont séparées par au moins deux organes flexibles (5a) de transmission d'effort d'écrasement présentant de préférence un jeu (w) entre eux.

12. Canalisation flexible selon l'une quelconque des revendications 1 à 11, caractérisée par le fait qu'elle comporte au moins une conduite périphérique sensible à l'écrasement et/ou à la traction logée avec un jeu (p) dans une gorge (11) formée par la réunion de deux organes flexibles de transmission d'effort d'écrasement (5b), ménageant entre eux un jeu (v), ladite gorge (11) s'ouvrant du côté de l'élément flexible central (2).

13. Canalisation flexible selon l'une quelconque des revendications 1 à 12, caractérisée par le fait qu'elle comporte au moins une conduite périphérique sensible à l'écrasement et/ou à la traction logée avec un jeu (q) dans une gorge (12) formée dans un organe flexible de transmission d'effort d'écrasement (5c), ladite gorge s'ouvrant du côté de l'élément flexible central (2).

14. Canalisation flexible selon l'une quelconque des revendications 1 à 13, caractérisée par le fait que ledit organe flexible de transmission d'effort d'écrasement présente au moins une cavité interne (9).

15. Canalisation selon l'une quelconque des revendications 1 à 14, caractérisée par le fait qu'elle vérifie la relation 2E ≥ c ≥ 0,6E et de préférence la relation 1,6 E ≥ c ≥ 0,8E,
où c désigne la largeur dudit organe de transmission d'effort d'écrasement, mesurée à mi-épaisseur dudit espace annulaire et E désigne l'épaisseur dudit espace annulaire.

16. Canalisation flexible selon l'une quelconque des revendications 1 à 15, caractérisée par le fait que ledit élément flexible central (2) est apte à reprendre au moins 75 % des efforts de traction.

17. Canalisation flexible selon l'une quelconque des revendications 1 à 16, caractérisée par le fait que ledit élément flexible central (2) est constitué par une conduite tubulaire de transport de gaz ou de liquide.

18. Canalisation flexible selon l'une quelconque des revendications 1 à 17, caractérisée par le fait que le diamètre externe dudit élément flexible central (2) supérieur ou égal à 100 mm.

19. Canalisation flexible selon l'une quelconque des revendications 1 à 18, caractérisée par le fait que la raideur dudit élément flexible central (2) est supérieure ou égale à 5 t/m/%.

## Patentansprüche

1. Flexible Rohrleitung (1; 1'; 1"; 1"'; 1"") mit mehreren Röhren, mit einem mittigen flexiblen Element (2), das zug- und druckbeständig ist, einer Hülle (8) und mehreren Umfangsröhren (3), die in einem zwischen dem mittigen flexiblen Element.(2) und der Hülle (8) enthaltenen Ringraum in wenigstens einer Lage um das mittige flexible Element gewickelt sind, wobei wenigstens eine der Umfangsröhren (3) druck- und/oder zugempfindlich ist, **dadurch gekennzeichnet**, daß die flexible Rohrleitung außerdem wenigstens ein flexibles Druckkraft-Übertragungsorgan (5; 5a; 5b; 5c) enthält, das in dem ringförmigen Raum angrenzend an die druck- und/oder zugempfindliche Umfangsröhre (3, 4)angeordnet ist.

2. Flexible Rohrleitung nach Anspruch 1, **dadurch gekennzeichnet**, daß sie Gleitmittel enthält, die eine axiale Verschiebung relativ zu der wenigstens einen - druck- und/oder zugempfindlichen Umfangsfangsröhre in bezug auf das angrenzende flexible Druckkraft-Übertragungsorgan (5; 5a; 5b; 5c) ermöglichen.

3. Flexible Rohrleitung nach Anspruch 2, **dadurch gekennzeichnet**, daß die Gleitmittel einen Spielraum (j; p; q) aufweisen, der zwischen der wenigstens einen druck- und/oder zugempfindlichen Umfangsröhre (3; 4) und dem angrenzenden flexiblen Druckkraft-Übertragungselement (5; 5a; 5b; 5c) ausgebildet ist.

4. Flexible Rohrleitung nach Anspruch 3, **dadurch gekennzeichnet**, daß der Spielraum (j; p; q) die folgende Beziehung erfüllt:
0,03d ≤ (j; p; q) ≤ 0,2d, und vorzugsweise die folgende Beziehung erfüllt:
0,1d ≤ (j; p; q) ≤ 0,15d, wobei
d den Außendurchmesser der druck- und/oder zugempfindlichen Umfangsröhre bezeichnet.

5. Flexible Rohrleitung nach einem der Ansprüche 1 bis 4, **dadurch gekennzeichnet**, daß das Druckkraft-Übertragungsorgan die Form eines Profilelements (5; 5a; 5b; 5c) hat.

6. Flexible Rohrleitung nach einem der Ansprüche 1 bis 5, **dadurch gekennzeichnet**, daß die Umfangsröhren schraubenlinienförmig um die Mittelachse (x) der Rohrleitung gewickelt sind.

7. Flexible Rohrleitung nach einem der Ansprüche 1 bis 5, **dadurch gekennzeichnet**, daß die Umfangsröhren in Schraubenliniensegmenten des "S-Z"-Typs gewickelt sind.

8. Flexible Rohrleitung nach einem der Ansprüche 6 und 7, **dadurch gekennzeichnet**, daß der Absolutwert des Steigungswinkels der Schraubenlinien-Wicklung oder der Schraubenliniensegment-Wicklung im Bereich von 10 bis 30° liegt und vorzugsweise gleich 15° ist.

9. Flexible Rohrleitung nach einem der Ansprüche 1 bis 8, **dadurch gekennzeichnet**, daß das Druckkraft-Übertragungsorgan (5; 5a; 5b; 5c) aus Kunststoff mit einer Shore-Härte D, die größer oder gleich 30 und vorzugsweise größer oder gleich 50 ist, hergestellt ist.

10. Flexible Rohrleitung nach einem der Ansprüche 1 bis 9, die wenigstens zwei aneinandergrenzende und druck- und/oder zugempfindliche Umfangsröhren umfaßt, **dadurch gekennzeichnet**, daß sie zwischen den beiden benachbarten Umfangsröhren ein Druckkraft-Übertragungsorgan aufweist, dessen Breite c die Beziehung c ≥ 0,6E, vorzugsweise die Beziehung c ≥ 0,8E erfüllt, wobei
E die Dicke des Ringraums bezeichnet, wobei die Breite c bei halber Dicke des Ringraums gemessen wird.

11. Flexible Rohrleitung nach einem der Ansprüche 1 bis 10, die wenigstens zwei druck- und/oder zugempfindliche Umfangsröhren aufweist, **dadurch gekennzeichnet**, daß diese beiden Röhren durch wenigstens zwei flexible Druckkraft-Übertragungsorgane (5a), die zwischen sich vorzugsweise einen Spielraum (w) aufweisen, getrennt sind.

12. Flexible Rohrleitung nach einem der Ansprüche 1 bis 11, **dadurch gekennzeichnet**, daß sie wenigstens eine druck- und/oder zugempfindliche Umfangsröhre aufweist, die sich mit einem Spielraum (p) in einer Nut (11) befindet, die durch die Vereinigung von zwei flexiblen Druckkraft-Übertragungsorganen (5b) gebildet ist, die zwischen sich einen Spielraum (v) aufweisen, wobei die Nut (11) zur Seite des flexiblen mittigen Elements (2) geöffnet ist.

13. Flexible Rohrleitung nach einem der Ansprüche 1 bis 12, **dadurch gekennzeichnet**, daß sie wenigstens eine druck- und/oder zugempfindliche Umfangsröhre aufweist, die sich mit einem Spielraum (q) in einer Nut (12) befindet, die in einem flexiblen Druckkraft-Übertragungsorgan (5c) gebildet ist, wobei die Nut zur Seite des flexiblen mittigen Elements (2) geöffnet ist.

14. Flexible Rohrleitung nach einem der Ansprüche 1 bis 13, **dadurch gekennzeichnet**, daß das flexible Druckkraft-Übertragungsorgan wenigstens einen inneren Hohlraum (9) aufweist.

15. Rohrleitung nach einem der Ansprüche 1 bis 14, **dadurch gekennzeichnet**, daß sie die Beziehung 2E ≥ c ≥ 0,6E und vorzugsweise die Beziehung 1,6E ≥ c ≥ 0,8E erfüllt,
wobei c die Breite des Druckkraft-Übertragungselements bezeichnet, die bei halber Dicke des Ringraums gemessen wird, und E die Dicke des Ringraums bezeichnet.

16. Flexible Rohrleitung nach einem der Ansprüche 1 bis 15, **dadurch gekennzeichnet**, daß das mittige flexible Element (2) wenigstens 75 % der Zugkräfte aufnehmen kann.

17. Flexible Rohrleitung nach einem der Ansprüche 1 bis 16, **dadurch gekennzeichnet**, daß das mittige flexible Element (2) durch eine röhrenförmige Leitung für den Transport von Gas oder Flüssigkeit gebildet ist.

18. Flexible Rohrleitung nach einem der Ansprüche 1 bis 17, **dadurch gekennzeichnet**, daß der Außendurchmesser des mittigen flexiblen Elements (2) größer oder gleich 100 mm ist.

19. Flexible Rohrleitung nach einem der Ansprüche 1 bis 18, **dadurch gekennzeichnet**, daß der Radius des mittigen flexiblen Elements (2) größer oder gleich 5 t/m/% ist.

## Claims

1. Multipipe flexible pipeline (1; 1'; 1"; 1"'; 1"") comprising a central flexible element (2) with a high tensile strength and a high compressive strength, a jacket (8) and a plurality of peripheral pipes (3) wound around the central flexible element in at least one ply in an annular space lying between the said central flexible element (2) and the said jacket (8), at least one of the said peripheral pipes (3) being sensitive to compression and/or tension, **characterized in that** the flexible pipeline furthermore includes at least one flexible compressive-load-transferring member (5; 5a; 5b; 5c) arranged in the said annular space and adjacent to the said compression- and/or tension-sensitive peripheral pipe (3, 4).

2. Flexible pipeline according to Claim 1, **characterized in that** it includes sliding means capable of allowing the said at least one compression- and/or tension-sensitive peripheral pipe to undergo relative axial movement with respect to the adjacent flexible compressive-load-transferring member (5; 5a; 5b; 5c).

3. Flexible pipeline according to Claim 2, **characterized in that** the said sliding means include a gap (j;p;q) left between the said at least one compression- and/or tension-sensitive peripheral pipe (3; 4) and the said adjacent flexible compressive-load-transferring member (5; 5a; 5b; 5c).

4. Flexible pipeline according to Claim 3, **characterized in that** the said gap (j;p;q) satisfies the relationship:
0.03d ≤ (j;p;q) ≤ 0.2d, and preferably the relationship:
0.1d ≤ (j;p;q) ≤ 0.15d, where d denotes the external diameter of the compression- and/or tension-sensitive peripheral pipe.

5. Flexible pipeline according to any one of Claims 1 to 4, **characterized in that** the said compressive-load-transferring member is in the form of a profile (5; 5a; 5b; 5c).

6. Flexible pipeline according to any one of Claims 1 to 5, **characterized in that** the said peripheral pipes are helically wound around the central axis (X) of the said pipeline.

7. Flexible pipeline according to any one of Claims 1 to 5, **characterized in that** the said peripheral pipes are wound in "S-Z"-type helical segments.

8. Flexible pipeline according to either of Claims 6 and 7, **characterized in that** the helix angle of the said helical winding or of the said winding in helical segments is, in absolute value, between 10° and 30°, and preferably equal to 15°.

9. Flexible pipeline according to any one of Claims 1 to 8, **characterized in that** the said compressive-load-transferring member (5; 5a; 5b; 5c) is made of a plastic having a Shore D hardness greater than or equal to 30 and preferably greater than or equal to 50.

10. Flexible pipeline according to any one of Claims 1 to 9, comprising at least two adjacent compression- and/or tension-sensitive peripheral pipes, **characterized in that** it includes a compressive-load-transferring member between the said two adjacent peripheral pipes, the width c of which satisfies the relationship c ≥ 0.6E and preferably the relationship C ≥ 0.8E,
where E denotes the thickness of the said annular space, the width c being measured at mid-thickness of the annular space.

11. Flexible pipeline according to any one of Claims 1 to 10, which includes at least two compression- and/or tension-sensitive peripheral pipes, **characterized in that** these two pipes are separated by at least two flexible compressive-load-transferring members (5a) preferably having a gap (w) between them.

12. Flexible pipeline according to any one of Claims 1 to 11, **characterized in that** it includes at least one compression- and/or tension-sensitive peripheral pipe housed with a gap (p) in a groove (11) formed by the junction of two flexible compressive-load-transferring members (5b), while leaving a gap (v) between them, the said groove (11) opening out towards the central flexible element (2).

13. Flexible pipeline according to any one of Claims 1 to 12, **characterized in that** it includes at least one compression- and/or tension-sensitive peripheral pipe housed with a gap (q) in a groove (12) formed in a flexible compressive-load-transferring member (5c), the said groove opening out towards the central flexible element (2).

14. Flexible pipeline according to any one of Claims 1 to 13, **characterized in that** the said flexible compressive-load-transferring member has at least one internal cavity (9).

15. Pipeline according to any one of Claims I to 14, **characterized in that** it satisfies the relationship 2E ≥ c ≥ 0.6E and preferably the relationship 1.6E ≥ c ≥ 0.8E,
where c denotes the width of the said compressive-load-transferring member, measured at mid-thickness of the said annular space and E denotes the thickness of the said annular space.

16. Flexible pipeline according to any one of Claims 1 to 15, **characterized in that** the said central flexible element (2) is capable of taking up at least 75% of the tensile loads.

17. Flexible pipeline according to any one of Claims 1 to 16, **characterized in that** the said central flexible element (2) consists of a tubular pipe for transporting gas or liquid.

18. Flexible pipeline according to any one of Claims 1 to 17, **characterized in that** the external diameter of the said central flexible element (2) is greater than or equal to 100 mm.

19. Flexible pipeline according to any one of Claims 1 to 18, **characterized in that** the stiffness of the said central flexible element (2) is greater than or equal to 5 t/m/%.
